# EUROPÄISCHE PATENTSCHRIFT

(11) **EP 0 476 466 B1**
(45) Veröffentlichungstag und Bekanntmachung des Hinweises auf die Patenterteilung: **29.11.1995**
(21) Anmeldenummer: 91115164.5
(22) Anmeldetag: 07.09.1991
(51) Int. Cl.: F16B 35/04, F16B 25/00, F16B 5/02, E06B 1/60

(54) **Befestigungsvorrichtung**
Fastening device
Dispositif de fixation

(30) Priorität: 20.09.1990 CH 3039/90
(43) Veröffentlichungstag der Anmeldung: 25.03.1992
(73) Patentinhaber: Flückiger, Werner, CH-5727 Oberkulm (CH)
(72) Erfinder: Flückiger, Werner, CH-5727 Oberkulm (CH)
(74) Vertreter: Heubeck, Bernhard

(56) Entgegenhaltungen:
- WO-A-85/01544
- CH-A- 659 294
- CH-A- 670 125
- DE-A- 3 340 666
- US-A- 1 705 086

## Beschreibung

Die Erfindung betrifft eine Befestigungsvorrichtung gemäss dem Oberbegriff des Anspruches 1.

Eine Vorrichtung dieser Art ist aus der CH-A-670 125 bekannt. Bei dieser Schraube wird die Hülse von der Gewindeseite her aufgeschoben und durch einen eingerollten Bund oder ein Sicherungselement am Schaftteil der Schraube gehalten. Der eingerollte Bund hat einerseits eine Verringerung des Schaftteiles und eine Verdichtung des Schaftteilmaterials zur Folge. Dies hat den Nachteil, dass der Schaftteil geschwächt wird und bei Anwendung abreisst.

Bei einer anderen Ausführungsform wird die Hülse über eine bestimmte Länge geschlitzt, um die Hülse an einem Schraubenkopf, einem Vorsprung oder einer Schulter zu halten, wobei die Hülse vom freien Schaftteilende her auf den Schaftteil gedrückt wird.

Diese Ausführungsform hat den Nachteil, dass die Schraube und Hülse als separate Teile hergestellt werden und die Hülse vor Gebrauch auf die Schraube aufgesetzt werden muss.

Bei den Ausführungsformen haftet ferner der Nachteil an, dass sie teuer in der Herstellung sind, weil eine automatische Zusammenstellung von Schraube und Hülse nur mit grösseren Aufwand möglich ist.

Die US-A-1,705,086 offenbart die drehbare Anordnung einer Schraube in einem Tragelement. Die Schraube ist durch eine Bördelung gehalten, die einen Kopf bildet. Der Kopf ist nicht geschlossen. Dadurch wird der Schaftteil geschwächt, was ein Nachteil ist.

Hier will die Erfindung Abhilfe schaffen. Die Erfindung wie sie in Anspruch 1 gekennzeichnet ist, löst die Aufgabe eine Befestigungsvorrichtung zu schaffen, welche ohne jegliche Schwächung der Hülse und Schraube vollautomatisch als gebrauchsfertiges Produkt herstellbar ist. Hierzu ist es erforderlich, dass die Hülse von der Schaftteilseite her aufgesetzt wird. Anschliessend erfolgt die Aufbördelung des rohrförmigen Abschnittes. Die so montierte Befestigungsvorrichtung hat den Vorteil, bei guter Qualität billig zu sein.

Nachfolgend wird die Erfindung anhand der beiliegenden Zeichnungen erläutert.

Es zeigen:
- Figur 1: eine teilweise aufgebrochen und geschnitten dargestelltes Ausführungsbeispiel des Erfindungsgegenstandes,
- Figur 2: eine teilweise aufgebrochen dargestellte Ansicht der in Figur 1 dargestellten Hülse, und
- Figur 3: eine teilweise aufgebrochen dargestellte Ansicht des Kopfteiles der in Figur 1 dargestellten Schraube vor der Montage der Hülse.

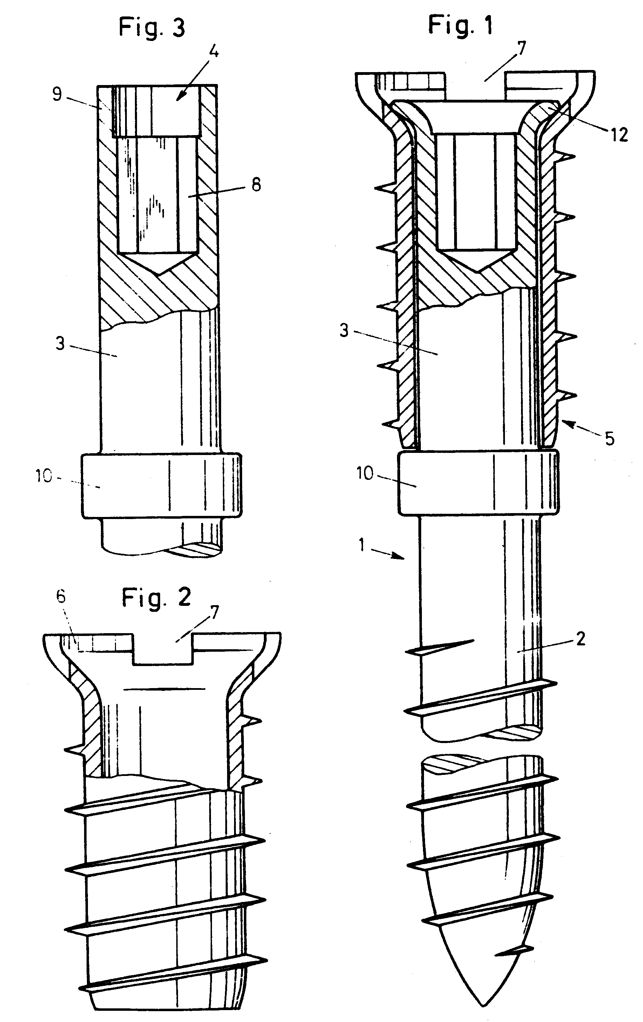

Das in Figur 1 dargestellte Ausführungsbeispiel besteht aus einer Schraube 1 mit einem Gewindeteil 2 und einen Schaftteil 3, der eine Ausnehmung 4 zum Einstecken eines nicht dargestellten Werkzeuges hat, und aus einer Hülse 5, die in einer Randpartie 6 vier Schlitze 7 aufweist und am Schaftteil 3 so gehalten ist, dass die Schraube 1 und die Hülse 5 gemeinsam oder einzeln durch das Werkzeug gedreht werden können.

Die Ausnehmung 4 besteht aus einem zylindrischen Teil, um einen rohrförmigen Abschnitt 9 zu bilden, und einen darin anschliessenden ausgebildeten Innensechskant 8.

Wie die Figur 2 zeigt, hat die Hülse 5 ein Aussengewinde, dessen Steigung gleich der des Gewindes am Gewindeteil 2 der Schraube 1 ist. Die mit den Schlitzen 7 versehene Randpartie 6 ist erweitert, so dass ein trichterförmiger Abschnitt gebildet wird.

Wie die Figur 1 zeigt, wird die Hülse 5 einerseits durch einen ringförmigen Ansatz 10, der am Schaftteil 3 ausgebildet ist, und andererseits durch einen aufgebördelten Abschnitt 12 des rohrförmigen Abschnittes 9 am Schaftteil 3 gehalten, dabei liegt dieser aufgebördelte Abschnitt 12 an der Innenseite der erweiterten Randpartie 6 der Hülse an.

Mit dieser Anordnung wird eine vorteilhafte Halterung der Hülse 5 am Schaftteil 3 erzielt, ohne dass der Querschnitt der Schraube 1 und der Hülse 5 geschwächt wird.

Die Schraube 1 und die Hülse 5 sind Pressteile, die mit hoher Massgenauigkeit herstellbar sind. Aus diesen Gründen ist es möglich, die Hülse 5 automatisch auf dem Schaftteil 3 der Schraube 1 zu montieren, weil die Aufbördelung des rohrförmigen Abschnittes einfach herstellbar ist. Darin besteht ein besonderer Vorteil des hier in Rede stehenden Erfindungsgegenstandes. Mit diesem einfachen Vorgang kann die Befestigungsvorrichtung billig und in hoher Qualität hergestellt werden.

Neben dem vorstehend beschriebenen Ausführungsbeispiel sind verschiedene Ausführungsformen des Erfindungsgegenstandes denkbar. So kann der Schaftteil 3 einen Durchmesser haben, der kleiner als der Aussendurchmesser des Gewindes am Gewindeteil 2 ist, so dass die Hülse 5 am oberen Gewindegang gehalten wird.

Anstelle des Innensechskant 8 kann die Schraube 1 auch mit einem Kreuzschlitz (nicht dargestellt) versehen sein.

## Patentansprüche

1. Befestigungsvorrichtung bestehend aus einer Schraube (1), die einen Gewindeteil (2) und einen Schaftteil (3) mit einer am freien Ende ausgebildeten Ausnehmung (4) zum Einstecken eines Werkzeuges aufweist und aus einer ein Aussengewinde aufweisenden Hülse (5), die Mittel zum Ansetzen eines zweiten Werkzeuges aufweist und die am Schaftteil drehbar und in axialer Richtung so gehalten ist, dass die Schraube und/oder die Hülse gedreht werden kann, dadurch gekennzeichnet, dass der Schaftteil (3) einen Abschnitt zur Aufnahme der Hülse (5) aufweist, der sich vom freien Ende des Schaftteiles bis zu einem mit dem Schaftteil einstückig ausgebildeten Vorsprung (10) erstreckt, derart, dass die Hülse (5) vom freien Schaftende her auf den Schaftteil (3) aufsteckbar ist und mit dem Ende, welches dem mit den Mitteln zum Ansetzen des zweiten Werkzeuges gegenüberliegt an den Vorsprung (10) anliegt, dass die Hülse (5) einen Abschnitt mit einem konstanten Innendurchmessser und eine radial erweiterte Randpartie (6) aufweist, in welcher die Mittel zum Ansetzen des zweiten Werkzeuges ausgebildet sind, und dass die Ausnehmung (4) aus einer Aufbördelung (12) eines rohrförmigen Abschnittes (9), der an der Innenseite des erweiterten Abschnittes anliegt und die Hülse (5) an dem Aufnahmeabschnitt des Schaftteiles (3) hält und einen anschliessend ausgebildeten Innensechskant (8) besteht, um das Werkzeug einzustecken.

2. Vorrichtung nach Anspruch 1, dadurch gekennzeichnet, dass der Schaftteil (3) einen kleineren Durchmesser als der Gewindeteil (2) aufweist und dass der Vorsprung(10) durch den letzten Gewindegang gebildet wird.

3. Vorrichtung nach Anspruch 1, dadurch gekennzeichnet, dass der Vorsprung ein Bund (10) ist, der einstückig mit dem Schaftteil (3) ausgebildet ist.

## Claims

1. Fastener device comprising a screw (1) having a threaded portion (2) and a shaft portion (3) with a recess (4) formed at the free end for the insertion of a tool, and a sleeve (5) having an external thread and means for applying a second tool, the sleeve being held rotatably at the shaft portion and in the axial direction in such a way that the screw and/or the sleeve can be turned, characterised in that the shaft portion (3) has a sleeve (5) receiving section which extends from the free end of the shaft portion up to a projection (10) formed in one piece with the shaft portion in such a way that the sleeve (5) can be pushed from the free end of the shaft onto the shaft part (3) and contacts the projection (10) with the end which lies opposite to the means for the application of the second tool; in that the sleeve (5) has a section with a constant internal diameter and a radially broadened end portion (6) in which the means for applying the second tool are formed; and in that the recess (4) comprises an outwardly directed flange (12) of a tubular portion (9) which contacts the inner side of the broadened portion and holds the sleeve (5) on the receiving section of the shaft portion (3) and, following this, an internal hexagon (8) in order to insert the tool.

2. Apparatus in accordance with claim 1, characterised in that the shaft portion (3) has a smaller diameter than the thread portion (2) and in that the projection (10) is formed by the last turn of the thread.

3. Apparatus in accordance with claim 1, characterised in that the projection is a collar (10) which is formed in one piece with the shaft portion (3).

## Revendications

1. Dispositif de fixation constitué d'une vis (1) qui présente une partie filetée (2) et une partie tige (3) avec un évidement (4) formé à l'extrémité libre pour l'engagement d'un outil et d'une douille (5) présentant un filetage extérieur comportant un moyen pour l'application d'un deuxième outil et qui est maintenu sur la dite partie tige en direction axiale avec possibilité de rotation de telle sorte que l'on peut faire tourner la vis et/ou la douille, caractérisé en ce que la partie tige (3) présente une section pour la réception de la douille (5) laquelle s'étend de l'extrémité libre de la partie tige jusqu'à une saillie (10) formée d'un seul tenant avec la partie tige, de telle sorte que la douille (5) peut être engagée sur la partie tige (3) à partir de l'extrémité libre de la tige en venant avec son extrémité qui est opposée au moyen d'application du deuxième outil en butée contre la saillie (10), en ce que la douille (5) présente une section de diamètre interne constant et une partie terminale (6) évasée, dans laquelle est formé le moyen pour l'application du deuxième outil, et en ce que l'évidement (4) présente un collet sur une section tubulaire (9), qui se place contre la face interne de la section élargie en maintenant la douille (5) sur la section de réception de la partie tige (3) et présente un six-pans (8) du côté intérieur pour l'engagement de l'outil.

2. Dispositif selon la revendication 1 caractérisé en ce que la partie tige (3) présente un diamètre plus petit que la partie filetée (2) et en ce que la saillie (10) est formée par le dernier filet.

3. Dispositif selon la revendication 1 caractérisé en ce que la saillie est un collet (10) venu d'une seule pièce avec la partie tige (3).
